# EUROPÄISCHE PATENTSCHRIFT

(11) **EP 1 611 266 B1**
(45) Veröffentlichungstag und Bekanntmachung des Hinweises auf die Patenterteilung: **06.10.2010**
(21) Anmeldenummer: 04739066.1
(22) Anmeldetag: 17.03.2004
(51) Int. Cl.: C23C 22/73

(54) **VERFAHREN ZUR HERSTELLUNG OBERFLÄCHENMODIFIZIERTER WERKSTÜCKE**
METHOD FOR PRODUCING PIECES HAVING A MODIFIED SURFACE
PROCEDE DE FABRICATION DE PIECES MODIFIEES EN SURFACE

(30) Priorität: 31.03.2003 DE 10314700
(43) Veröffentlichungstag der Anmeldung: 04.01.2006
(60) Teilanmeldung: 10172067.0
(73) Patentinhaber: Behr GmbH & Co. KG, 70469 Stuttgart (DE)
(72) Erfinder: BOGER, Snjezana, 73734 Esslingen (DE); ENGLERT, Peter, 74177 Bad Friedrichshall (DE); PFITZER, Mathias, 73421 Aalen (DE); TRAUTWEIN, Ingo, 74321 Bietigheim-Bissingen (DE); SEDLMEIR, Sabine, 72285 Pfalzgrafenweiler-Bösingen (DE)
(86) Internationale Anmeldenummer: PCT/EP2004/002751
(87) Internationale Veröffentlichungsnummer: WO 2004/087993

(56) Entgegenhaltungen:
- EP-A- 0 163 471
- EP-A- 0 781 860
- EP-A- 1 154 041
- WO-A-99/48641
- WO-A-03/048403
- DE-A- 2 909 698
- DE-A- 10 044 454
- GB-A- 863 098
- GB-A- 1 076 678
- JP-A- 55 044 537
- JP-A- 59 232 694
- JP-A- 62 206 387
- US-A- 2 809 423
- US-A- 4 446 057
- US-A- 5 532 024
- US-A- 5 750 197
- US-A- 5 820 015
- PATENT ABSTRACTS OF JAPAN Bd. 0131, Nr. 54 (M-814), 14. April 1989 (1989-04-14) & JP 63 317297 A (KANTO YAKIN KOGYO KK), 26. Dezember 1988 (1988-12-26) & DATABASE WPI Section Ch, Week 198906 Derwent Publications Ltd., London, GB; Class M23, AN 1989-043956 & JP 63 317297 A (KANTO-YAKIN KOGYO K) 26. Dezember 1988 (1988-12-26)
- PATENT ABSTRACTS OF JAPAN Bd. 0081, Nr. 14 (C-225), 26. Mai 1984 (1984-05-26) -& JP 59 028575 A (HONDA GIKEN KOGYO KK), 15. Februar 1984 (1984-02-15)

## Beschreibung

Die vorliegende Erfindung betrifft Verfahren zur Herstellung oberflächenmodifizierter Werkstücke gemäß dem Oberbegriff von Anspruch 1.

Die direkte Beschichtung von Aluminium oder Aluminiumlegierungen mittels organischer Beschichtungssysteme ist aufgrund der geringen Haftfähigkeit der organischen Beschichtungssysteme auf dem Aluminium nahezu unmöglich. Zur Verbesserung der Haftvermittlung zwischen Ausgangswerkstoff und organischen Beschichtungssystemen ist es daher bekannt, Aluminium oder Aluminiumlegierungen einer sogenannten Böhmit-Behandlung zu unterziehen, wobei heißes Wasser oder heißer Dampf, gegebenenfalls zusammen mit Ammoniak oder Aminen, mit dem Werkstück in Verbindung gebracht wird, so dass eine Aluminiumoxid- bzw. Böhmit-Schicht gebildet beziehungsweise verstärkt wird. Diese ermöglicht dann das Aufbringen einer organischen Beschichtung. Die EP 1 142 663 A1 beschreibt Böhmitverfahren, im Rahmen derer deionisiertes Wasser bei Temperaturen von etwa 100°C oder Dampf bei Temperaturen von 150°C eingesetzt wird, um Aluminiumteile oberflächlich zu modifizieren. Aus der US 3,945,899 geht eine Böhmit-Behandlung von Aluminiumteilen mit Wasser einer Temperatur von 65 bis 100°C beziehungsweise Dampf mit Temperaturen von 100 bis 180°C hervor, wobei der Zusatz von Aminen und Ammoniak eine nochmalige Verstärkung der Aluminiumoxidschicht bewirkt.

Aus dieser Schrift ist es auch bekannt, Aluminium oder dessen Legierungen einer chemischen Oberflächenbehandlung unter Einsatz von wässrigen Lösungen von Chromaten oder Phosphaten zu unterziehen, um auf diese Weise einerseits die Haftfähigkeit zu erhöhen und andererseits die Korrosionsanfälligkeit zu reduzieren. Diese sogenannte Konversionsbehandlung ist auch aus Stolzenfels (Industrie-Lackierbetrieb, Nr. 3, Seite 93-98, Curt R. Vincentz Verlag) bekannt, welche Chromatierungen von Aluminium-Werkstücken bei Temperaturen von 20 bis 50°C beschreibt. Riese-Meyer et al. (Aluminium 1991, Nr. 12, Seite 1215-1221) beschreibt chemische Konversionsbehandlungen mittels schichtbildender Phosphatierungen und Chromatierungen, wodurch die Lackhaftung und der Korrosionsschutz von Aluminium-Werkstücken verbessert werden können. Auch gemäß dieser Druckschrift wird die Chromatierung bei einer Temperatur von 20 bis 30°C beziehungsweise 30 bis 40°C durchgeführt.

Die EP 1154041 A1 offenbart eine Konversionsbeschichtung von Aluminium. Die JP 59232694 offenbart ein Verfahren zum Löten von Wärmeübertragern, die JP 62206387 offenbart einen Wärmeübertrager und die JP 55044537 offenbart eine chemische Konversionsbehandlung.

Die EP 0 163 471 A2 offenbart die Phosphatierung von erhitztem Draht in einem Ca-Zn-Phosphatbad und die GB 863098 offenbart eiin Verfahren zum Beschichten von Metalloverflächen (Al - und Mg-Panels) mit wässrigen Suspensionen bei Temperaturen bis ca. 420°C.

Die vorgenannten Verfahren erweisen sich jedoch unter anderem aufgrund energetischer Überlegungen als nachteilig. Da die gemäß dem Stand der Technik zu modifizierenden Werkstücke in der Regel Raumtemperatur aufweisen, d.h. gegenüber einem vorhergehenden Löt- oder Fügeprozess in abgekühltem Zustand eingesetzt werden, ergibt sich ein erhöhter Handhabungs- und Zeitbedarf bei der Oberflächenmodifizierung solcher Werkstücke. Überdies neigen die im Stand der Technik zu modifizierenden Formkörper aus Aluminium oder Aluminiumlegierungen aufgrund des nach der Herstellung durchgeführten langsamen Abkühlprozesses zur sogenannten Grobkornbildung.

Der vorliegenden Erfindung liegt daher das technische Problem zugrunde, die vorgenannten Nachteile überwindende Verfahren bereitzustellen, insbesondere Verfahren bereitzustellen, die in kostengünstigerer Weise haftverbesserte und/oder korrosionsgeschütztere Werkstücke aus Aluminium oder Aluminiumlegierungen bereitstellen, insbesondere solche, deren Struktur sich bei gleicher oder verbesserter Korrosionsbeständigkeit und Haftvermittlung durch eine verringerte Grobkornbildung im Vergleich zu herkömmlich hergestellten Aluminium- oder Aluminiumlegierungs-Werkstücken auszeichnet.

Die vorliegende Erfindung löst das ihr zugrundeliegende technische Problem durch die Merkmale des Kennzeichens von Anspruch 1.

Im Zusammenhang mit der vorliegenden Erfindung wird unter einem Werkstück ein beliebig ausgebildeter Gegenstand verstanden, der beispielsweise als Formkörper, also Körper definierter Gestalt, aber auch als Granulat oder Pulver vorliegen kann. In bevorzugter Ausführungsform liegt das Werkstück als Wärmetauscher oder wesentlicher Bestandteil desselben vor.

In einer bevorzugten Ausführungsform der vorliegenden Erfindung ist das zu modifizierende Werkstück aus Aluminium, Magnesium, Kupfer oder einer oder mehreren Aluminium- und/oder Magnesium- und/oder Kupfedegierungen aufgebaut, d.h. besteht aus Aluminium oder einer oder mehreren Legierungen oder enthält Aluminium oder eine oder mehrere Aluminiumlegierungen im Wesentlichen, zum Beispiel in Anteilen zu mindestens 50, 60, 70, 80, 90, 95 und insbesondere 99 Gew.-%, bezogen auf das Gewicht des Werkstückes.

Die Erfindung sieht in ihrer ersten Ausgestaltung vor, dass das bereitgestellte zu modifizierende Werkstück eine Temperatur von 300 °C bis 550°C, und das mindestens eine modifizierende Mittel eine Temperatur von mindestens 0°C und höchstens 100°C aufweist, wobei das modifizierende Mittel ein Metallsalz eines Elementes einer der Nebengruppen IV bis VI des PSE (Periodensystem der Elemente) oder ein Metallsalz eines Elementes der Hauptgruppe I, II, III oder IV des PSE, wobei das Metallsalz eine Verbindung mit einem Element der Hauptgruppe V, VI, VII oder VIII des PSE aufweist und wobei das modifizierende Mittel ein CAB-Flussmittel aufweist, und das Metallsalz in einer wässrigen Phase vorliegt, wobei deren pH-Wert zwischen 3 und 10 liegt und wobei die Behandlung des Werkstückes durchgeführt wird, indem das mindestens eine modifizierende Mittel als Aerosol und/oder Dampf mit dem Werkstück in Kontakt gebracht wird oder die Behandlung des Werkstückes durchgeführt wird, indem das Werkstück in das mindestens eine, in Form einer insbesondere wässrigen Lösung vorliegende modifizierende Mittel getaucht oder mit diesem geflutet wird und das Metall oder eine Legierung Aluminium, Magnesium und/oder Kupfer enthält.

Die erfindungsgemäß angestrebte Oberflächenmodifikation ist dabei eine chemische Konversion, das heißt die Ausbildung einer Konversionsschicht und/oder eine Ausbildung oder Verstärkung einer Böhmitschicht oder Aluminiumoxidschicht. Die erfindungsgemäß angestrebte Oberflächenmodifizierung kann in einer bevorzugten Ausführungsform auch in dem Einbau korrosionsinhibierender Stoffe in die Aluminiumoxid- beziehungsweise Böhmitschicht liegen, und/oder in der Erzeugung von Konversionsschichten durch chemisch- physikalische Modifizierung gegebenenfalls vorhandener Flussmittelschichten.

So kann vorgesehen sein, dass Werkstücke, die aufgrund eines vorhergehenden CAB-Lötverfahrens bereits eine CAB-Flussmittelschicht aufweisen, mittels der erfindungsgemäßen Vorgehensweise dergestalt behandelt werden, dass die vorhandene CAB-Flussmittelschicht chemisch-physikalisch modifiziert wird. Die erfindungsgemäße Vorgehensweise kann in einer Dotierung der vorhandenen Flussmittelschicht, zum Beispiel mit Metallen der Hauptgruppen I, II, III oder IV oder der Nebengruppen, insbesondere IV bis VI oder/und einer Erhöhung des Sauerstoff-Anteils resultieren. Die erfindungsgemäße Behandlung resultiert unter anderem in einer verbesserten Korrosionsbeständigkeit.

Der erfindungsgemäß bevorzugte Einsatz eines modifizierenden Mittels mit einer geringen Temperatur von 0°C bis 100°C, bevorzugt 0 bis 80°C, besonders bevorzugt 20 bis 65°C, führt bei Behandlung eines Werkstückes mit einer hohen Temperatur von 300 bis 550°C zu einer raschen Abkühlung des Werkstückes und damit in vorteilhafter Weise zu einer Unterdrückung beziehungsweise Reduzierung der Grobkornbildung im Werkstück. Die erhabenen Werkstücke unterscheiden sich daher unter Umständen in ihrer Struktur vorteilhaft von in herkömmlicher Weise hergestellten Werkstücken.

Die erfindungsgemäß bevorzugt vorgesehene Behandlung von Flussmittel (CAB)-beschichteten Werkstücken führt unter Umständen zu einem vorteilhaften schuppigen, geschlossenen und abgerundeten Erscheinungsbild der Flussmittelschicht des Aluminiumteils, das sich von dem offenporigen, kantigen und plättchenartigen Erscheinungsbild unbehandelter Flussmittelbeschichteter Aluminiumteile unterscheidet.

In der Ausgestaltung der Erfindung weist das zu modifizierende Werkstück eine Temperatur von 300 bis 550°C auf. Diese Ausgestaltung der vorliegenden Erfindung ermöglicht die vorteilhafte Oberflächenmodifikation eines Werkstückes, insbesondere die Erzeugung einer Metalloxid- oder Böhmitschicht, die Verstärkung einer vorhandenen Metalloxid- oder Böhmitschicht, den Einbau korrosionsinhibierender Stoffe in eine Metalloxid- oder Böhmitschicht und/oder die Erzeugung von Konversionsschichten durch chemisch-physikalische Modifikation, insbesondere von Flussmittelschichten.

Nach der Oberflächenmodifikation des Werkstückes können die Werkstücke in üblicher Weise weiterbehandelt, insbesondere gespült und getrocknet werden. Es kann selbstverständlich auch eine weitere Beschichtung, zum Beispiel mittels organischer Beschichtungssysteme erfolgen. Das vorliegende Verfahren stellt also einen Ausschnitt aus dem Herstellprozess eines Werkstückes, zum Beispiel eines Wärmetauschers, dar. Die erfindungsgemäß vorgesehene Herstellweise führt im Rahmen dieses Herstellverfahrens zu einer Verringerung der Herstellkosten für Werkstücke, zur Einsparung von Energie und Ressourcen, insbesondere durch Nutzung vorhandener Wärmekapazitäten der Werkstücke und zum reduzierten Einsatz beziehungsweise zur Vermeidung des Einsatzes von aggressiven Chemikalien zur Oberflächenbehandlung.

Als modifizierendes Mittel kommen unter Umständen alle bekannten chemischen Elemente, Verbindungen, Gemische oder sonstige Zusammensetzungen in Frage. Das eingesetzte modifizierende Mittel enthält eine oder mehrere Metallsalze eines oder mehrerer Elemente der Nebengruppen des PSE, insbesondere der Nebengruppen IV bis VI des PSE (Periodensystem der Elemente), zum Beispiel Titan, Hafnium, Vanadium, Tantal, Molybdän, Wolfram und insbesondere Zirkonium.

In einer weiteren Ausführungsform der vorliegenden Erfindung kann das modifizierende Mittel eine oder mehrere Verbindungen, insbesondere ein oder mehrere Metallsalze eines oder mehrerer Elemente der Hauptgruppen I, II, III und/oder IV des Periodensystems der Elemente enthalten, zum Beispiel ein Metallsalz von Beryllium, Barium, insbesondere von Magnesium oder Calzium oder Natrium oder Kalium.

In einer weiteren Ausführungsform der vorliegenden Erfindung kann das modifizierende Mittel eine oder mehrere Verbindungen eines oder mehrerer Elemente der Hauptgruppen V, VI, VII und/oder VIII des Periodensystems der Elemente aufweisen.

In bevorzugter Ausführungsform der Erfindung können die vorgenannten Metalle in Salzform mit Anionen ausgewählt aus der Gruppe bestehend aus Chloriden, Carbonaten, insbesondere Hydrogencarbonaten, Nitraten, Sulfaten, Peroxiden und Phosphaten vorliegen. Insbesondere die Metallsalze der Elemente der Hauptgruppe I und II, zum Beispiel Kalium, Natrium und Kalzium, können als Lauge, also KOH, NaOH oder Ca(OH)₂, oder als Borat, Aluminat, Silikat oder Halogenid, insbesondere Fluorid, vorliegen.

In einer weiteren bevorzugten Ausführungsform der Erfindung ist das mindestens eine modifizierende Mittel ein CAB-Flussmittel ("controlled atmosphere brazing") der allgemeinen Formel KₓAl F_{y} mit x gleich 1 bis 3 und y = 4 bis 6, zum Beispiel Kaliumaluminiumhexafluorid und/oder CsₓAlF_{y}.

In einer weiteren bevorzugten Ausführungsform wird als modifizierendes Mittel ein Ammoniumsalz, wie beispielsweise Ammoniumfluorid oder Ammoniumcarbonat, Kaliumfluorid, Natrium- oder Kaliumsilikat, Natrium- oder Kaliumborat, Natrium- oder Kaliumaluminat, vernetzbare, insbesondere metallorganische, wie beispielsweise zirkon- oder titanorganische, oder siliziumorganische Verbindungen oder auch Wasserstoffperoxid eingesetzt.

In besonders bevorzugter Ausführungsform werden zur Behandlung des Werkstückes das CAB-Flussmittel, Ammoniumsalz und/oder Kaliumfluorid in alkalischer Phase insbesondere in Form wässriger bevorzugt alkalischer Lösungen oder alkalischer Dämpfe oder Aerosole eingesetzt.

Die Metallverbindungen eines der Elemente der Nebengruppen, insbesondere Nebengruppen IV bis VI, beziehungsweise der Hauptgruppe I, II, III oder IV können in organischer und/oder anorganischer Phase, vorzugsweise in wässriger Phase vorliegen, insbesondere in flüssiger oder gasförmiger Phase, vorzugsweise in Aerosolform oder als Dampf. Das zur Lösung eingesetzte Wasser ist vorzugsweise vollentsalztes Wasser.

In einer weiteren bevorzugten Ausführungsform ist vorgesehen, als modifizierendes Mittel zur Behandlung der Oberfläche des Werkstücks Wasser, vorzugsweise vollentsalztes und destilliertes Wasser einzusetzen. Selbstverständlich ist es erfindungsgemäß auch möglich, als oberflächenmodifizierendes Mittel wässrige Lösungen von Ammoniak, von Aminen, insbesondere primären, sekundären oder tertiären Aminen, zum Beispiel Mono-, Di- oder Triethanolamine, Dimethylethanolamine, organischen Säuren oder Salzen von Ammoniak, Aminen, halogenierten organischen Verbindungen und/oder organischen Säuren einzusetzen. Selbstverständlich können auch Gemische der vorgenannten modifizierenden Mittel eingesetzt werden.

Bevorzugt kommt eine Lösung von 0,1 - 1 % KOH und/oder 0,1 - 1 % NH₄OH und/oder 0,1 - 1 % KₓAlF_{y} (x = 1 bis 3, y = 4 bis 6) und/oder 0,1 - 1 % Ca (NO₃)₂ und/oder 0,1 - 1 % Salze der Elemente der Nebengruppen IV bis VI des PSE in vollentsalztem Wasser zum Einsatz.

In einer besonders bevorzugten Ausführungsform der vorliegenden Erfindung wird als Ausgangswerkstück für das erfindungsgemäße Verfahren ein aus einem CAB-Lötverfahren resultierendes CAB-flussmittel beschichtetes Werkstück verwendet, welches mit einem oder mehreren der eingesetzten modifizierenden Mitteln unter den angegebenen Bedingungen behandelt wird. Dabei kann insbesondere bei Behandlung der Oberfläche mit Wasser oder wässrigen Lösungen eine modifiziert Oberfläche mit einem erhöhten Sauerstoffanteil erhalten werden, wobei diese je nach Art des eingesetzten modifizierenden Mittels auch dotiert sein kann, zum Beispiel mit einem oder mehreren der Metalle der Hauptgruppe I, II, III oder IV oder der Nebengruppen, insbesondere der Nebengruppen IV bis VI, oder sonstiger eingesetzter modifizierender Mittel.

Die Erfindung sieht in einer anderen bevorzugten Ausführungsform vor, dass das Metallsalz, das CAB-Flussmittel, Ammoniumsalz und/oder Kaliumfluorid oder ein anderer Bestandteil des modifizierenden Mittels in einer Matrix, zum Beispiel einer Matrix aus organischen und/oder anorganischen Lösemitteln oder Mischungen davon zur Behandlung der Oberfläche des Werkstückes eingesetzt wird. Die Matrix enthält dabei metallorganische, insbesondere siliziumorganische Verbindungen. Insbesondere enthält die Matrix organische und/oder anorganische Polymere, oder auch ein Gemisch der genannten Stoffe.

In einer besonders bevorzugten Ausführungsform ist vorgesehen, das Metallsalz, das CAB-Flussmittel, Ammoniumfluorid und/oder Kaliumfluorid oder ein anderer Bestandteil des modifizierenden Mittels bei der Behandlung in einer Konzentration von 10 ppm bis 100000 ppm, bevorzugt von 50 ppm bis 10 000 ppm, einzusetzen.

Das mindestens eine modifizierende Mittel wird mit dem zu modifizierenden Werkstück in Kontakt gebracht, indem das Werkstück in das mindestens eine Mittel eingetaucht und imprägniert wird, oder indem es mit dem mindestens einen modifizierenden Mittel gespült oder geflutet und dabei imprägniert wird, öder indem das mindestens eine modifizierende Mittel auf das Werkstück gesprüht wird, insbesondere mittels sogenannter Airless- oder Ultraschall-Zerstäubung oder in sonstiger Form in Kontakt gebracht wird.

In einer besonderen Ausführungsform kann vorgesehen sein, das modifizierende Mittel unter gegenüber Atmosphärendruck erhöhtem Druck auf das Werkstück einwirken zu lassen. Bei einer Besprühung kann neben Druckluft auch ein anderes Gas zum Einsatz kommen, zum Beispiel Sauerstoff, Stickstoff, Fluor, Ozon oder Dampf.

Als Metallsalze finden beispielsweise wässrige Lösungen von Ca(NO₃)₂ oder Zr(NO₃)₄ Verwendung, insbesondere mit Konzentrationen zwischen 0,1% und 5%, wobei deren pH-Wert bevorzugt zwischen 5,5 und 7,5 bis 8. Die Anwendungstemperatur liegt dabei vorteilhafterweise zwischen 40°C und 60°C. Auch ist es unter Umständen von Vorteil, 0,005% bis 5% Tetraethylammoniumtetrafluoroborat zuzufügen.

Insbesondere wird mit einer solchen Lösung ein gelöteter, vorzugsweise CAB-gelöteter Wärmeübertrager behandelt.

Gemäß einer vorteilhaften Ausführungsform weist das zumindest eine modifizierende Mittel ein Biozid auf. Beispielsweise bei einem Wärmeübertrager in einer Heizungs- und/oder Klimaanlage ist eine hierdurch resultierende Keimhemmung erwünscht.

Gemäß einer weiteren vorteilhaften Ausführungsform wird durch das modifizierende Mittel eine oxidationshemmende Wirkung erreicht, indem das Mittel einen Oxidationshemmer aufweist oder mittels des erfindungsgemäßen Verfahrens auf der Oberfläche aufweist. Ein Oxidationshemmer ist beispielsweise durch eine Metalloxid- oder Böhmitschicht gegeben.

Die Erfindung ermöglicht die Bereiststellung mittels der vorgenannten Verfahren hergestellter oberflächenmodifizierter Werkstücke, insbesondere oberflächenmodifizierter Wärmetauscher aus Aluminium oder Aluminiumlegierungen.

In vorteilhafter Weiterbildung der Erfindung wird das oberflächenmodifizierte Werkstück in einem weiteren Schritt mit einem oder mehreren organischen oder anorganischen Beschichtungssystemen versehen, welches besonders vorteilhaft keimhemmende und/oder hydrophile oder hydrophobe Eigenschaften aufweist. Ein Aufbringen solcher lackähnlichen Schichten ist sowohl ohne als auch mit einem dazwischenliegenden Trocknungsschritt möglich.

Die Erfindung wird ebenfalls gelöst durch ein Verfahren zur Verbindung zweier oder auch mehrerer Werkstücke gemäß Anspruch 13. Ein Fertigungsprozeß, der ein solches Verfahren beinhaltet, ist schnell durchführbar, so daß ein Fertigungsaufwand reduzierbar ist. Dies gilt insbesondere für Verfahren zur stoffschlüssigen Verbindung mehrerer Werkstücke, ist jedoch auch bei anderen Verbindungsverfahren wie beispielsweise mechanischem Fügen gegeben, wobei unter Umständen die Notwendigkeit eines (Wieder-) Aufheizens des Werkstücks zur Anwendung des erfindungsgemäßen Verfahrens besteht.

Die Durchführung der Erfindung wird gelöst durch eine Vorrichtung zum stoffschlüssigen Verbinden zumindest zweier Werkstücke, bei der eine Temperierkammer für eine Temperierung, insbesondere Erwärmung, der Werkstücke eine Einrichtung zum Aufbringen eines oberflächenmodifizierenden Mittels auf zumindest eines der Werkstücke aufweist. Vorteilhaft dient die Temperierkammer gleichzeitig dem stoffschlüssigen Verbinden, wie beispielsweise Verlöten oder Verschweißen, und der Oberflächenmodinkation der Werkstücke.

Bevorzugt ist die Einrichtung zum Aufbringen eines oberflächenmodifizierenden Mittels als Sprühdüse ausgebildet, die zur Durchführung des erfindungsgemäßen Verfahrens besonders bevorzugt selbst temperierbar ist. Genauso gut ist eine Temperierung des oberflächenmodifizierenden Mittels in einer Zuleitung der Einrichtung möglich.

Im übrigen ist die Vorrichtung zur Durchführung der Erfindung unter Umständen auf bekannte Weise aufgebaut, beispiesweise nach Art eines Vakuum- oder eines Durchlauflötofens.

Weitere vorteilhafte Ausgestaltungen der vorliegenden Erfindung ergeben sich aus den Unteransprüchen.

## Patentansprüche

1. Verfahren zur Herstellung oberflächenmodifizierter Werkstücke aus einem Metall und/oder einer oder mehreren Legierungen, umfassend das Bereitstellen des zu modifizierenden Werkstückes und das Behandeln dieses Werkstückes mit mindestens einem modifizierenden Mittel zum Erhalt des obertlächenmodifizierten Werkstückes, **dadurch gekennzeichnet, dass** das bereitgestellte zu modifizierende Werkstück eine Temperatur von 300 °C bis 550°C, und das mindestens eine modifizierende Mittel eine Temperatur von mindestens 0°C und höchstens 100°C aufweist, wobei das modifizierende Mittel ein Metallsalz eines Elementes einer der Nebengruppen IV bis VI des PSE (Periodensystem der Elemente) oder ein Metallsalz eines Elementes der Hauptgruppe I, II, III oder IV des PSE, wobei das Metallsalz eine Verbindung mit einem Element der Hauptgruppe V, VI, VII oder VIII des PSE aufweist und wobei das modifizierende Mittel ein CAB-Flussmittel aufweist, und das Metallsalz in einer wässrigen Phase vorliegt, wobei deren pH-Wert zwischen 3 und 10 liegt und wobei die Behandlung des Werkstückes durchgeführt wird, indem das mindestens eine modifizierende Mittel als Aerosol und/oder Dampf mit dem Werkstück in Kontakt gebracht wird oder die Behandlung des Werkstückes durchgeführt wird, indem das Werkstück in das mindestens eine, in Form einer insbesondere wässrigen Lösung vorliegende modifizierende Mittel getaucht oder mit diesem geflutet wird und das Metall oder eine Legierung Aluminium, Magnesium und/oder Kupfer enthält.

2. Verfahren nach Anspruch 1, **dadurch gekennzeichnet, dass** das modifizierte Mittel auf das Werkstück gesprüht wird.

3. Verfahren nach einem der vorhergehenden Ansprüche, wobei das modifizierende Mittel ein Ammoniumsalz, insbesondere Ammoniumfluorid, Kaliumfluorid, Natrium- oder Kaliumsilikat, Natrium- oder Kaliumborat, Natrium- oder Kaliumaluminat und/oder zumindest eine vernetzbare Verbindung, wie beispielsweise eine metallorganische, insbesondere zirkon- oder titanorganische Verbindung und/oder zumindest eine siliziumorganische Verbindung oder dergleichen aufweist.

4. Verfahren nach einem der vorhergehenden Ansprüche, wobei das CAB-Flussmittel, das Ammoniumsalz oder das Kaliumfluorid in einer Phase mit alkalischem pH-Wert vorliegt.

5. Verfahren nach einem der vorhergehenden Ansprüche, wobei das modifizierende Mittel Wasser, insbesondere voll entsalztes und destilliertes Wasser, oder eine wässrige Lösung enthaltend Ammoniak, Amine, Gase oder organische Säuren oder deren Salze oder Mischungen davon aufweist.

6. Verfahren nach einem der vorhergehenden Ansprüche, wobei ein Metallsalz, ein CAB-Flussmittel, Ammoniumfluorid, Kaliumfluorid, Natrium- oder Kaliumsilikat, Natrium- oder Kaliumborat und/oder Natrium- oder Kaliumaluminat und/oder zumindest eine vernetzbare Verbindung, wie beispielsweise eine metallorganische, insbesondere zirkon- oder titanorganische Verbindung und/oder zumindest eine siliziumorganische Verbindung oder dergleichen in einer Matrix zur Behandlung des Werkstückes eingesetzt wird/werden.

7. Verfahren nach Anspruch 6, wobei die Matrix aus organischen, anorganischen Lösemitteln oder Mischungen davon aufgebaut ist.

8. Verfahren nach einem der vorhergehenden Ansprüche, wobei ein Metallsalz, ein CAB-Flussmittel, Ammoniumfluorid, Kaliumfluorid, Natrium- oder Kaliumsilikat, Natrium- oder Kaliumborat und/oder Natrium- oder Kaliumaluminat und/oder metallorganische, insbesondere zirkon- oder titanorganische, oder siliziumorganische Verbindungen zur Behandlung des Werkstückes in einer Konzentration von 10 ppm bis 100000 ppm, insbesondere von 50 ppm bis 10000 ppm, eingesetzt wird/werden.

9. Verfahren nach einem der vorhergehenden Ansprüche, wobei das zu modifizierende Werkstück ein Wärmeübertrager ist, insbesondere ein CAB-gelöteter Wärmeübertrager.

10. Verfahren nach einem der vorhergehenden Ansprüche, wobei das zumindest eine modifizierende Mittel ein Biozid und/oder einen Korrossionshemmer aufweist oder auf der Oberfläche des Werkstücks erzeugt.

11. Verfahren nach einem der vorhergehenden Ansprüche, **dadurch gekennzeichnet, dass** in zumindest einem nachfolgenden Schritt ein organisches oder anorganisches Beschichtungssystem appliziert wird.

12. Verfahren nach Anspruch 11, wobei das Beschichtungssystem ein Biozid aufweist und/oder hydrophile oder hydrophobe Eigenschaften aufweist.

13. Verfahren zur stoffschlüssigen Verbindung zumindest zweier Werkstücke, die nach einem der Ansprüche 1 bis 12 oberflächenmodifiziert werden, wobei die Werkstücke durch CAB-Löten stoffschlüssig verbunden werden und danach das Oberflächenmodifizieren durchgeführt wird.

14. Verfahren nach Anspruch 13, mit einer Temperierkammer und einer in oder an der Temperierkammer angeordneten Einrichtung zum Aufbringen eines oberflächenmodifizierenden Mittels auf zumindest ein Werkstück.

## Claims

1. Method for the production of surface-modified workpieces from a metal and/or one or more alloys, comprising the provision of the workpiece to be modified and the treatment of the said workpiece with at least one modifying agent to obtain the surface-modified workpiece, **characterised in that** the workpiece which has been provided to be modified has a temperature of 300°C to 550°C and the at least one modifying agent has a minimum temperature of 0°C and a maximum temperature of 100°C, wherein the modifying agent contains a metal salt of an element of one of the sub-groups IV to VI of the PSE (periodic system of the elements) or a metal salt of an element of the main group I, II, III or IV of the PSE, wherein the metal salt comprises a compound with an element of the main group V, VI, VII or VIII of the PSE and wherein the modifying agent contains a CAB flux and the metal salt is present in an aqueous phase with a pH-value between 3 and 10, and wherein the workpiece is treated by bringing the at least one modifying agent into contact with the workpiece in the form of an aerosol and/or vapour, or wherein the workpiece is treated by immersing the workpiece in the at least one modifying agent, which is in particular present as an aqueous solution, or by flooding the workpiece therewith, the metal or alloy containing aluminium, magnesium and/or copper.

2. Method according to claim 1, **characterised in that** the modifying agent is sprayed onto the workpiece

3. Method according to any of the preceding claims, wherein the modifying agent contains an ammonium salt, in particular ammonium fluoride, potassium fluoride, sodium or potassium silicate, sodium or potassium borate, sodium or potassium aluminate and/or at least one cross-linkable compound, such as a metallic-organic, in particular zirconium- or titanium-organic compound, and/or at least one silicon-organic compound or the like.

4. Method according to any of the preceding claims, wherein the CAB flux, the ammonium salt or the potassium fluoride is present in a phase with an alkaline pH-value.

5. Method according to any of the preceding claims, wherein the modifying agent contains water, in particular fully desalinated and distilled water, or an aqueous solution containing ammonia, amines, gases or organic acids or their salts or combinations thereof.

6. Method according to any of the preceding claims, wherein a metal salt, a CAB flux, ammonium fluoride, potassium fluoride, sodium or potassium silicate, sodium or potassium borate, and/or sodium or potassium aluminate and/or at least one cross-linkable compound, such as a metallic-organic, in particular zirconium- or titanium-organic compound, and/or at least one silicon-organic compound or the like is/are used in a matrix to treat the workpiece.

7. Method according to any of the preceding claims, wherein the matrix is made up from organic or inorganic solvents or combinations thereof.

8. Method according to any of the preceding claims, wherein a metal salt, a CAB flux, ammonium fluoride, potassium fluoride, sodium or potassium silicate, sodium or potassium borate, and/or sodium or potassium aluminate and/or metallic-organic compounds, in particular zirconium- or titanium-organic compounds or silicon-organic compounds, is/are used to treat the workpiece in a concentration of 10 ppm to 100 000 ppm, in particular 50 ppm to 10 000 ppm.

9. Method according to any of the preceding claims, wherein the workpiece to be modified is a heat exchanger, in particular a CAB-soldered heat exchanger.

10. Method according to any of the preceding claims, wherein the at least one modifying agent contains or generates on the surface of the workpiece a biocide and/or a corrosion inhibitor.

11. Method according to any of the preceding claims, an organic or inorganic coating system is applied in at least one subsequent step.

12. Method according to claim 11, wherein the coating system contains a biocide and/or has hydrophilic or hydrophobic properties.

13. Method for joining at least two workpieces surface-modified according to any of claims 1 to 12 by adhesive force, wherein the workpieces are joined by CAB soldering followed by surface modification.

14. Method according to claim 13, with a tempering chamber and a device provided in or on the tempering chamber for the application of a surface-modifying agent to at least one workpiece.

## Revendications

1. Procédé de fabrication de pièces d'usinage modifiées en surface, se composant d'un métal et / ou d'un ou de plusieurs alliages, comprenant l'approvisionnement de la pièce d'usinage à modifier et le traitement de cette pièce d'usinage avec au moins un moyen de modification, pour l'obtention de la pièce d'usinage modifiée en surface,
**caractérisé en ce que** la pièce d'usinage approvisionnée, à modifier, présente une température de 300°C à 550°C, et le moyen de modification, au moins au nombre de un, une température d'au moins 0°C et au maximum de 100°C, où le moyen de modification contient un sel métallique d'un élément de l'un des groupes secondaires IV à VI de la classification périodique des éléments (PSE) ou bien un sel métallique d'un élément du groupe principal I, II, III ou IV de la classification périodique des éléments (PSE), où le sel métallique présente un composé avec un élément du groupe principal V, VI, VII ou VIII de la classification périodique des éléments (PSE), et où le moyen de modification présente un fondant de brasage sous atmosphère contrôlée (CAB), et le sel métallique est présent dans une phase aqueuse, où la valeur de pH de cette phase est comprise entre 3 et 10, et où le traitement de la pièce d'usinage est mis en oeuvre, tandis que le moyen de modification au moins au nombre de un, sous forme d'aérosol et / ou de vapeur, est placé en contact avec la pièce d'usinage, ou bien le traitement de la pièce d'usinage est mis en oeuvre, tandis que la pièce d'usinage est plongée dans le moyen de modification, au moins au nombre de un, se présentant sous la forme d'une solution en particulier aqueuse, ou bien ladite pièce d'usinage est noyée par ce moyen de modification, et le métal ou un alliage contient de l'aluminium, du magnésium et / ou du cuivre.

2. Procédé selon la revendication 1, **caractérisé en ce que** le moyen modifié est appliqué sur la pièce d'usinage, par pulvérisation.

3. Procédé selon l'une ou l'autre des revendications précédentes, où le moyen de modification présente un sel d'ammonium, en particulier du fluorure d'ammonium, du fluorure de potassium, du silicate de sodium ou de potassium, du borate de sodium ou de potassium, de l'aluminate de sodium ou de potassium et / ou au moins un composé réticulable, comme par exemple un composé organométallique, en particulier un composé organique à base de zirconium ou de titane et / ou au moins un composé organique à base de silicium ou bien un composé de type analogue.

4. Procédé selon l'une quelconque des revendications précédentes, où le fondant de brasage sous atmosphère contrôlée (CAB), le sel d'ammonium ou le fluorure de potassium sont présents dans une phase ayant une valeur de pH alcaline.

5. Procédé selon l'une quelconque des revendications précédentes, où le moyen de modification contient de l'eau, en particulier de l'eau complètement dessalée et distillée, ou bien une solution aqueuse contenant de l'ammoniac, des amines, des gaz ou des acides organiques ou leurs sels, ou bien des mélanges de ces éléments.

6. Procédé selon l'une quelconque des revendications précédentes, où l'on utilise, dans une matrice servant au traitement de la pièce d'usinage, un sel métallique, un fondant de brasage sous atmosphère contrôlée (CAB), du fluorure d'ammonium, du fluorure de potassium, du silicate de sodium ou de potassium, du borate de sodium ou de potassium et / ou de l'aluminate de sodium ou de potassium et / ou au moins un composé réticulable, comme par exemple un composé organométallique, en particulier un composé organique à base de zirconium ou de titane et / ou au moins un composé organique à base de silicium ou bien un composé de type analogue.

7. Procédé selon la revendication 6, où la matrice est constituée de solvants organiques, anorganiques ou de mélanges de ces solvants.

8. Procédé selon l'une quelconque des revendications précédentes où, pour le traitement de la pièce d'usinage, on utilise un sel métallique, un fondant de brasage sous atmosphère contrôlée (CAB), du fluorure d'ammonium, du fluorure de potassium, du silicate de sodium ou de potassium, du borate de sodium ou de potassium et / ou de l'aluminate de sodium ou de potassium et / ou des composés organométalliques, en particulier des composés organiques à base de zirconium ou de titane ou à base de silicium, suivant une concentration de 10 ppm à 100 000 ppm, en particulier de 50 ppm à 10 000 ppm.

9. Procédé selon l'une quelconque des revendications précédentes, où la pièce d'usinage à modifier est un échangeur de chaleur, en particulier un échangeur de chaleur brasé sous atmosphère contrôlée (CAB).

10. Procédé selon l'une quelconque des revendications précédentes, où le moyen de modification au moins au nombre de un contient ou produit, sur la surface de la pièce d'usinage, un biocide et / ou un inhibiteur de corrosion.

11. Procédé selon l'une quelconque des revendications précédentes, **caractérisé en ce qu'**un système de revêtement organique ou anorganique est appliqué au moins au cours d'une étape suivante.

12. Procédé selon la revendication 11, où le système de revêtement contient un biocide et / ou présente des propriétés hydrophiles ou hydrophobes.

13. Procédé d'assemblage par continuité de matière, d'au moins deux pièces d'usinage qui ont été modifiées en surface selon l'une quelconque des revendications 1 à 12, où les pièces d'usinage sont assemblées par continuité de matière, par brasage sous atmosphère contrôlée (CAB) et, ensuite, est mise en oeuvre la modification de surface.

14. Procédé selon la revendication 13, comprenant une chambre d'équilibrage de température et un dispositif agencé dans ou sur la chambre d'équilibrage de température, pour l'application d'un moyen modifiant la surface, sur au moins une pièce d'usinage.
